# EUROPEAN PATENT SPECIFICATION

(11) **EP 4 461 994 B1**
(45) Date of publication and mention of the grant of the patent: **04.11.2026**
(21) Application number: 22918100.3
(22) Date of filing: 16.05.2022
(51) Int. Cl.: F16H 57/02

(54) **ELECTRICALLY DRIVEN GEARBOX ASSEMBLY HAVING STEPPED HOLE POSITIONING**
ELEKTRISCH ANGETRIEBENE GETRIEBEANORDNUNG MIT GESTUFTER LOCHPOSITIONIERUNG
ENSEMBLE BOÎTE DE VITESSES À ENTRAÎNEMENT ÉLECTRIQUE, À POSITIONNEMENT PAR TROUS ÉCHELONNÉS

(30) Priority: 04.01.2022 CN 202210002945
(43) Date of publication of application: 13.11.2024
(73) Proprietor: Jing-Jin Electric Technologies Co., Ltd., Beijing 100015 (CN)
(72) Inventor: LI, Jianwen, Beijing 100015 (CN); YANG, Xudong, Beijing 100015 (CN); LI, Jiaqi, Beijing 100015 (CN)
(74) Representative: AOMB Polska Sp. z.o.o.
(86) International application number: PCT/CN2022/093019
(87) International publication number: WO 2023/130641

(56) References cited:
- EP-A1- 1 426 639
- EP-A1- 3 620 686
- CN-A- 108 194 621
- CN-A- 108 674 179
- CN-A- 112 377 598
- CN-A- 114 483 921
- CN-A- 114 483 921
- CN-B- 108 194 621
- CN-U- 214 171 273
- CN-U- 214 788 944
- CN-U- 214 788 944
- JP-A- 2009 008 243

## Description

### TECHNICAL FIELD

The present invention belongs to the technical field of electric drive assemblies, and particularly relates to an electric drive gearbox assembly with stepped hole positioning.

### BACKGROUND

With the continuous development of the automotive industry, people have higher and higher requirements for the structural setting of the gearbox and the entire automotive power system. In order to reduce the axial size of the powertrain, most powertrains adopt an integrated shaft structure supported by multiple bearings. Moreover, the housings of the powertrain are usually positioned and connected by positioning pins and positioning holes. In the process of assembling a housing assembly equipped with a bearing outer ring and a bearing roller to another housing assembly equipped with a bearing inner ring, there is not enough offset space between the positioning pin and the positioning hole, so the bearing roller and the bearing inner ring compress each other during the assembly process, which causes scratches on the surface of the bearing raceway, and further affects the performance and life of the bearing and the entire power system.

In response to this problem, the existing patent "Electric drive power transmission system housing assembly with stepped pin positioning and its installation method" (application number: CN202110202229.3) proposes using a stepped pin to prevent the occurrence of scratches on the surface of the bearing raceway caused by the compressing between the bearing outer ring and the bearing roller. However, since the structures of two ends of the stepped pin are different, when a first housing and an intermediate housing are assembled in batches through stepped pins, it is easy to have the ends of stepped pin installed in reverse, thereby resulting in invalid assembly and further affecting the assembly efficiency.

Document CN 108 194 621 A discloses a gear case with a self-positioning function. The gear case comprises a case body and a case cover which are mutually spliced. The gear case further comprises a rough positioning mechanism and a fine positioning mechanism. The rough positioning mechanism comprises a transverse positioning unit and a longitudinal positioning unit. The transverse positioning unit is used for positioning the case body and the case cover in the transverse direction. The longitudinal positioning unit is used for positioning the case body and the case cover in the longitudinal direction. The transverse positioning unit comprises a transverse positioning pin arranged on the case body and a transverse positioning hole formed in the case cover. The longitudinal positioning unit comprises a longitudinal positioning pin arranged on the case body and a longitudinal positioning hole formed in the case cover, and the longitudinal positioning pin and the longitudinal positioning hole are matched. The fine positioning mechanism comprises positioning protrusions symmetrically arranged on the two sides of the case cover, and positioning grooves symmetrically formed in the two sides of the case body.

Document EP 3 620 686 A1 discloses a gear motor in which an input shaft of a speed reducer and a motor shaft can be easily joined to each other. The gear motor has a motor and the speed reducer, and has a joining member located between the motor shaft of the motor and the input shaft of the speed reducer. At least one shaft of the motor shaft and the input shaft has a first hollow portion penetrating in an axial direction. The other shaft of the motor shaft and the input shaft and the joining member are joined to each other by a bolt exposed to the first hollow portion.

### SUMMARY

With respect to the above problems, the present invention provides an electric drive gearbox assembly with stepped hole positioning to overcome the above problems or at least partially solve the above problems.

To achieve the above object, the present invention adopts the following technical solutions.

An electric drive gearbox assembly with stepped hole positioning, comprising a first housing, a second housing and a positioning pin;
wherein the first housing is provided with a first positioning hole on its connecting surface, the second housing is provided with a second positioning hole corresponding to the first positioning hole, and the first housing and the second housing are positioned and connected through the first positioning hole, the second positioning hole and the positioning pin;
the first positioning hole and/or the second positioning hole are stepped holes, the stepped hole comprises a guiding section close to an open end of the stepped hole and an engaging section far away from the open end of the stepped hole, an aperture of the guiding section is larger than an aperture of the engaging section, and the guiding section is used to guide the positioning pin into the engaging section,
the electric drive gearbox assembly further comprises a power shaft, wherein one end of the power shaft is supportedly connected to the first housing through a first bearing, and a middle position of the power shaft is supportedly connected to the second housing through a second bearing,
wherein an inner ring of the first bearing is fixedly connected to the power shaft, and an outer ring of the first bearing is fixedly connected to the first housing,
wherein in the stepped hole, a gap between the guiding section and the positioning pin is provided, so that during an assembly process, when more than half, in an axial direction, of a roller of the first bearing enters an inner ring raceway of the first bearing, a radial space is maintained between the inner ring of the first bearing and the roller of the first bearing and between the outer ring of the first bearing and the roller of the first bearing

Further, the aperture of the engaging section in the stepped hole is same as a diameter of the positioning pin; or,
the engaging section is in an interference fit with the positioning pin.

Further, a ventilation groove arranged axially is provided on an outer surface of the positioning pin.

Further, a ventilation hole is provided on the first housing and/or the second housing, and the ventilation hole is communicated to the engaging section.

Further, an end of the positioning pin is provided with a guide slope or a guide arc surface.

Further, the stepped hole further comprises a directing section arranged between the guiding section and the engaging section, and the directing section is used to guide the positioning pin into the engaging section from the guiding section.

Further, in the stepped hole, axial lengths of the guiding section and the engaging section are determined according to axial sizes of the first bearing, the first housing and the power shaft.

The advantages and beneficial effects of the present invention are as follows.

In the electric drive gearbox assembly of the present invention, by setting the first positioning hole on the first housing and/or the second positioning hole on the second housing as stepped holes, the radial gap between the guiding section of the stepped hole and the positioning pin can be used to achieve the pre-positioning of the first housing and the second housing, and the first housing can be radially adjusted relative to the second housing during the pre-positioning, so as to facilitate the positioning and assembly of the first housing and the second housing. In addition, since both ends of the positioning pin can be engaged with the first positioning hole and the second positioning hole, invalid assembly can be avoided when the positioning pin is assembled and positioning in the first positioning hole and the second positioning hole, thereby achieving the automated and batch assembly of the electric drive assembly.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present invention. Moreover, throughout the drawings, the same reference numerals are used to denote the same components. In the drawings:
FIG. 1 is an axial cross-sectional view of an electric drive gearbox assembly in a first embodiment of the present invention;
FIG. 2 is a cross-sectional view of an initial stage of the assembly process of a first bearing of the electric drive gearbox assembly in the first embodiment of the present invention;
FIG. 3 is a cross-sectional view of a stage of the assembly process of a first bearing of the electric drive gearbox assembly in the first embodiment of the present invention where a positioning pin begins to enter an engaging section of a first positioning hole;
FIG. 4 is a cross-sectional view of a stage of the assembly process of a first bearing of the electric drive gearbox assembly in the first embodiment of the present invention where a roller of the first bearing completely enters the inner ring raceway;
FIG. 5 is an axial cross-sectional view of the electric drive gearbox assembly in a second embodiment of the present invention; and
FIG. 6 is a cross-sectional view of a stage of the assembly process of a first bearing of the electric drive gearbox assembly in the second embodiment of the present invention where a positioning pin begins to enter an engaging section of a first positioning hole.

In the drawings: 1, first housing; 2, second housing; 3, positioning pin; 4, first positioning hole; 4-1, guiding section; 4-2, engaging section; 5, second positioning hole; 6, power shaft; 7, first bearing; 7-1, inner ring of the first bearing; 7-2, outer ring of the first bearing; 7-3, roller of the first bearing; 8, second bearing.

### DETAILED DESCRIPTION

In order to make the object, technical solutions, and advantages of the present invention clearer, the present invention will be described clearly and completely in conjunction with the specific embodiments and corresponding drawings. Obviously, the embodiments described are only part of rather than all of the embodiments of the present invention.

The technical solutions provided by the embodiments of the present invention will be described in detail below in conjunction with the accompanying drawings.

### First Embodiment

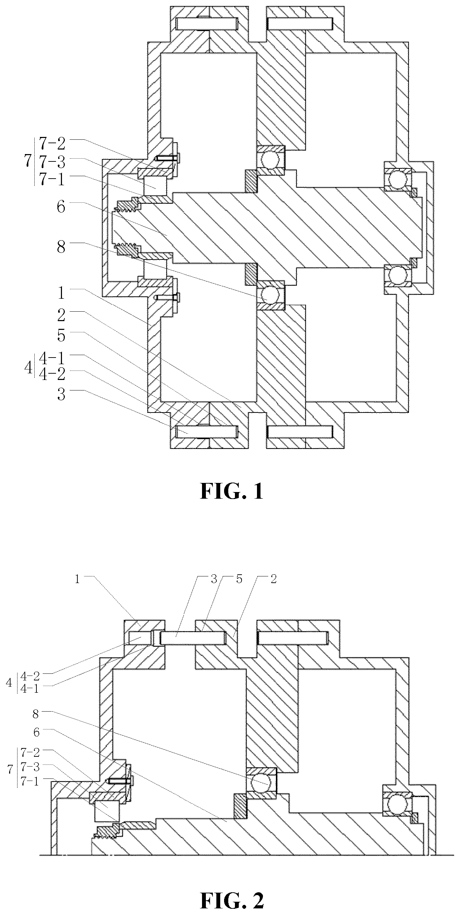

This embodiment provides an electric drive gearbox assembly with stepped hole positioning. As shown in FIGS. 1 to 4, the electric drive gearbox assembly comprises a first housing 1, a second housing 2 and a positioning pin 3. The radial cross section of the positioning pin 3 may be a circle or a regular polygon, or other shapes.

Specifically, a first positioning hole 4 is provided on a connection surface of the first housing 1 where the first housing 1 and the second housing 2 are connected. The specific number and position of the first positioning hole 4 can be adjusted as needed. A second positioning hole 5 corresponding to the first positioning hole 4 is provided on the second housing 2. The first housing 1 and the second housing 2 are positioned and connected through the first positioning hole 4, the second positioning hole 5 and the positioning pin 3. That is, two ends of the positioning pin 3 are respectively inserted into the first positioning hole 4 and the second positioning hole 5 to achieve relative fixation of the first housing 1 and the second housing 2.

The first positioning hole 4 is a stepped hole. Specifically, it comprises a guiding section 4-1 close to an open end of the stepped hole and an engaging section 4-2 far away from the open end of the stepped hole, the aperture of the guiding section 4-1 is larger than the aperture of the engaging section 4-2, and the guiding section 4-1 is used to guide the positioning pin 3 into the engaging section 4-2. Moreover, the second positioning hole 5 and the positioning pin 3 are preferably in an interference fit. In this way, when the first housing 1 and the second housing 2 are assembled through the positioning pin 3, one end of the positioning pin 3 is first inserted into the second positioning hole 5, and then when the other end of the positioning pin 3 is inserted into the guiding section 4-1 in the first positioning hole 4, the positioning pin 3 and the first positioning hole 4 are pre-positioned, that is, the first housing 1 and the second housing 2 are pre-positioned. At this point, due to the radial gap between the positioning pin 3 and the guiding section 4-1, the first housing 1 can be radially adjusted relative to the second housing 2; when the end of the positioning pin 3 enters the engaging section 4-2 from the guiding section 4-1 in the first positioning hole 4, the first housing 1 and the second housing 2 are radially positioned.

Of course, in other embodiments, alternatively, the second positioning hole is a stepped hole and the first positioning hole is a straight hole; or, the first positioning hole and the second positioning hole are both stepped holes.

In sum, in the electric drive gearbox assembly of this embodiment, by setting the first positioning hole on the first housing and/or the second positioning hole on the second housing as stepped holes, the radial gap between the guiding section of the stepped hole and the positioning pin can be used to achieve the pre-positioning of the first housing and the second housing, and the first housing can be radially adjusted relative to the second housing during the pre-positioning, so as to facilitate the positioning and assembly of the first housing and the second housing. In addition, since both ends of the positioning pin can be engaged with the first positioning hole and the second positioning hole, invalid assembly can be avoided when the positioning pin is assembled and positioning in the first positioning hole and the second positioning hole, thereby improving the assembly efficiency and promoting the automated and batch assembly of the electric drive assembly.

In this embodiment, the aperture of the engaging section in the stepped hole is the same as the diameter of the positioning pin. By setting them the same, the accuracy of the assembly of the first housing and the second housing can be improved, and the electric drive gearbox assembly can be effectively prevented from loosening due to long-term vibration or generating abnormal noise. Of course, in other embodiments, alternatively, the engaging section and the positioning pin may be engaged in an interference fit to achieve firm and fixed connection between the first housing and the second housing.

Further, a ventilation groove arranged axially is provided on the outer surface of the positioning pin. When the end of the positioning pin enters the engaging section from the guiding section, the gas between the positioning pin and the engaging section is discharged through the ventilation groove, so that the positioning pin can smoothly enter the engaging section.

In this embodiment, the first positioning hole further comprises a directing section arranged between the guiding section and the engaging section, and the directing section is used to guide the positioning pin into the engaging section from the guiding section, so that the end of the positioning pin can more easily and accurately enter the engaging section from the guiding section, thereby improving the assembly efficiency.

In this embodiment, as shown in FIGS. 1 to 4, the electric drive gearbox assembly further comprises a power shaft 6, one end of the power shaft 6 is supportedly connected to the first housing 1 through a first bearing 7, and a middle position of the power shaft 6 is supportedly connected to the second housing 2 through a second bearing 8.

The inner ring 7-1 of the first bearing is fixedly connected to the power shaft 6, the outer ring 7-2 of the first bearing is fixedly connected to the first housing 1, and the roller 7-3 of the first bearing is fixed on the outer ring 7-2 of the first bearing.

Moreover, in the first positioning hole, the gap between the guiding section and the positioning pin satisfies the following condition: during the assembly process, when more than half, in an axial direction, of an roller of the first bearing enters an inner ring raceway of the first bearing, a radial space is maintained between the inner ring of the first bearing and the roller of the first bearing and between the outer ring of the first bearing and the roller of the first bearing.

In addition, in the first positioning hole, axial lengths of the guiding section and the engaging section are determined according to axial sizes of the first bearing, the first housing and the power shaft. Specifically, the axial length of the guiding section is determined so that when the end of the positioning pin is inserted into an initial or middle position of the guiding section, the outer ring of the first bearing, the roller of the first bearing and the inner ring of the first bearing are in the initial assembly position; when the end of the positioning pin is inserted into a tail end of the guiding section, at least half of the roller of the first bearing enters the inner ring slideway of the first bearing. The axial length of the engaging section is determined so that when the end of the positioning pin is fully inserted into the engaging section, the remaining part of the roller of the first bearing completely enters the inner ring raceway of the first bearing.

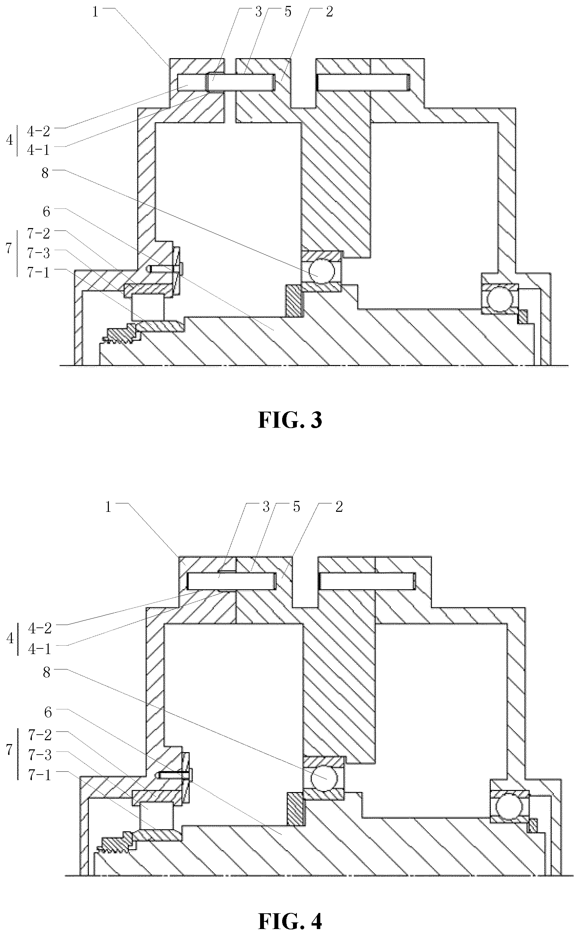

In this embodiment, when the first housing 1 and the second housing 2 are assembled, as shown in FIG. 2, when the end of the positioning pin 3 is inserted into the guiding section 4-1, the first bearing 7 is in the assembly position. Due to the radial gap between the positioning pin 3 and the guiding section 4-1, the first housing 1 can be radially adjusted relative to the second housing 2, so that there is enough radial space between the inner ring 7-1 of the first bearing and the roller 7-3 of the first bearing, which is convenient for radial adjustment of them, and can prevent the inner ring 7-1 of the first bearing and the roller 7-3 of the first bearing from scratching each other. As shown in FIG. 3, when at least half, in an axial direction, of the roller 7-3 of the first bearing enters the inner ring raceway of the first bearing, the end of the positioning pin 3 begins to enter the engaging section 4-2; when an end of the positioning pin 3 is inserted into the engaging section 4-2, as shown in FIG. 4, the roller 7-3 of the first bearing completely enters the inner ring raceway of the first bearing, that is, the assembly of the first bearing 7 is completed.

By setting the first positioning hole as a stepped hole, the stepped engaging of the positioning pin and the stepped hole is achieved, which can prevent scratches on the surface of the inner ring raceway of the first bearing caused by compressing between the inner ring and roller of the first bearing during the assembly of the first housing and the second housing, thereby improving the service life of the first bearing and the electric drive gearbox assembly.

### Second Embodiment

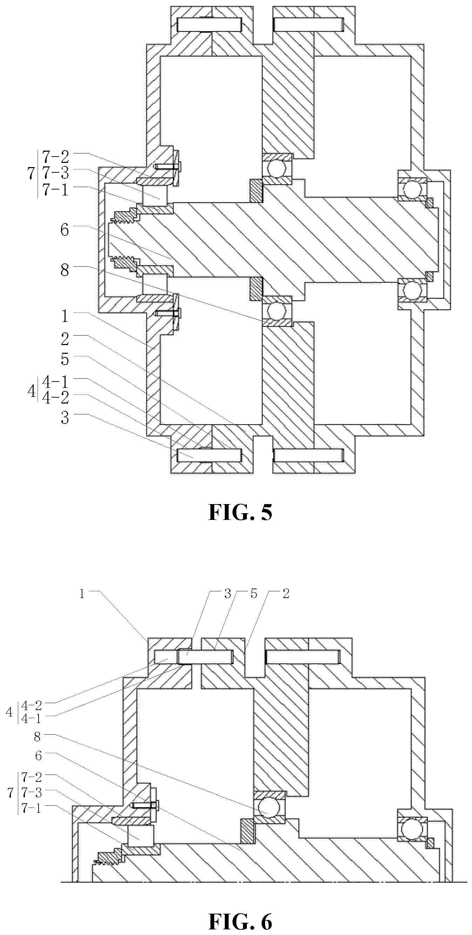

This embodiment differs from the first embodiment in that, as shown in FIGS. 5 and 6, the inner ring 7-1 of the first bearing is fixedly connected to the power shaft 6, the outer ring 7-2 of the first bearing is fixedly connected to the first housing 1, and the roller 7-3 of the first bearing is fixed to the inner ring 7-1 of the first bearing. At this point, the first bearing can be a split cylindrical roller bearing.

### Third Embodiment

This embodiment differs from the first embodiment in that there is not a ventilation groove. In addition, when the first positioning hole and the second positioning hole are both stepped holes, ventilation holes are provided on both the first housing and the second housing, and the ventilation holes are communicated with the engaging section so that when the positioning pin enters the engaging section, the gas between the positioning pin and the engaging section can be discharged through the ventilation holes, so that the positioning pin can smoothly enter the engaging section. When only the first positioning hole is a stepped hole, the ventilation hole is provided on the first housing; when only the second positioning hole is a stepped hole, the ventilation hole is provided on the second housing.

### Fourth Embodiment

This embodiment differs from the first embodiment in that, an end of the positioning pin is provided with a guide slope or a guide arc surface, which facilitates the positioning pin entering the engaging section from the guiding section, thereby reducing the difficulty of assembly.

The above merely describes particular embodiments of the present invention. By the teaching of the present invention, a person skilled in the art can make other modifications or variations based on the above embodiments. A person skilled in the art should appreciate that, the detailed description above is only for the purpose of explaining the present invention, and the protection scope of the present invention should be subject to the protection scope of the claims.

## Claims

1. An electric drive gearbox assembly with stepped hole positioning, comprising: a first housing (1), a second housing (2) and a positioning pin (3);
wherein the first housing (1) is provided with a first positioning hole (4) on its connecting surface, the second housing (2) is provided with a second positioning hole (5) corresponding to the first positioning hole (4), and the first housing (1) and the second housing (2) are positioned and connected through the first positioning hole (4), the second positioning hole (5) and the positioning pin (3);
wherein the first positioning hole (4) and/or the second positioning hole (5) are stepped holes, the stepped hole comprises a guiding section (4-1) close to an open end of the stepped hole and an engaging section (4-2) far away from the open end of the stepped hole, an aperture of the guiding section (4-1) is larger than an aperture of the engaging section (4-2), wherein the guiding section (4-1) is used to guide the positioning pin (3) into the engaging section (4-2),
**characterized in that** the electric drive gearbox assembly further comprises a power shaft (6), wherein one end of the power shaft (6) is supportedly connected to the first housing (1) through a first bearing (7), and a middle position of the power shaft (6) is supportedly connected to the second housing (2) through a second bearing (8),
an inner ring of the first bearing (7-1) is fixedly connected to the power shaft (6), and an outer ring of the first bearing (7-2) is fixedly connected to the first housing (1),
wherein in the stepped hole, a gap between the guiding section (4-1) and the positioning pin (3) is provided, so that during an assembly process, when more than half, in an axial direction, of a roller of the first bearing (7-3) enters an inner ring raceway of the first bearing (7), a radial space is maintained between the inner ring of the first bearing (7-1) and the roller of the first bearing (7-3) and between the outer ring of the first bearing (7-2) and the roller of the first bearing (7-3).

2. The electric drive gearbox assembly according to claim 1, **characterized in that**: the aperture of the engaging section (4-2) in the stepped hole is same as a diameter of the positioning pin (3); or, the engaging section (4-2) is in an interference fit with the positioning pin (3).

3. The electric drive gearbox assembly according to claim 2, **characterized in that**: a ventilation groove arranged axially is provided on an outer surface of the positioning pin (3).

4. The electric drive gearbox assembly according to claim 2, **characterized in that**: a ventilation hole is provided on the first housing (1) and/or the second housing (2), and the ventilation hole is communicated with the engaging section (4-2).

5. The electric drive gearbox assembly according to claim 1, **characterized in that**: an end of the positioning pin (3) is provided with a guide slope or a guide arc surface.

6. The electric drive gearbox assembly according to claim 1, **characterized in that**: the stepped hole further comprises a directing section arranged between the guiding section (4-1) and the engaging section (4-2), and the directing section is used to guide the positioning pin (3) into the engaging section (4-2) from the guiding section (4-1).

7. The electric drive gearbox assembly according to claim 1, **characterized in that**: in the stepped hole, axial lengths of the guiding section (4-1) and the engaging section (4-2) are determined according to axial sizes of the first bearing (7), the first housing (1) and the power shaft (6).

## Patentansprüche

1. Elektrische Antriebsgetriebeanordnung mit Stufenbohrungspositionierung, umfassend: ein erstes Gehäuse (1), ein zweites Gehäuse (2) und einen Positionierstift (3);
wobei das erste Gehäuse (1) an seiner Verbindungsfläche mit einer ersten Positionierbohrung versehen ist, das zweite Gehäuse (2) mit einer der ersten Positionierbohrung (4) entsprechenden zweiten Positionierbohrung (5) versehen ist, und das erste Gehäuse (1) und das zweite Gehäuse (2) über die erste Positionierbohrung (4), die zweite Positionierbohrung (5) und den Positionierstift (3) positioniert und verbunden sind;
wobei die erste Positionierbohrung (4) und/oder die zweite Positionierbohrung (5) Stufenbohrungen sind, wobei die Stufenbohrung einen Führungsabschnitt (4-1) nahe einem offenen Ende der Stufenbohrung und einen Eingriffsabschnitt (4-2) weit entfernt vom offenen Ende der Stufenbohrung umfasst, wobei eine Öffnung des Führungsabschnitts (4-1) größer ist als eine Öffnung des Eingriffsabschnitts (4-2), wobei der Führungsabschnitt (4-1) dazu verwendet wird, den Positionierstift (3) in den Eingriffsabschnitt (4-2) zu führen,
**dadurch gekennzeichnet, dass** die elektrische Antriebsgetriebeanordnung ferner eine Leistungswelle (6) umfasst, wobei ein Ende der Leistungswelle (6) über ein erstes Lager (7) mit dem ersten Gehäuse (1) lagernd verbunden ist und eine Mittelposition der Leistungswelle (6) über ein zweites Lager (8) mit dem zweiten Gehäuse (2) lagernd verbunden ist,
ein Innenring des ersten Lagers (7-1) fest mit der Leistungswelle (6) verbunden ist und ein Außenring des ersten Lagers (7-2) fest mit dem ersten Gehäuse (1) verbunden ist,
wobei in der Stufenbohrung ein Spalt zwischen dem Führungsabschnitt (4-1) und dem Positionierstift (3) vorgesehen ist, sodass während eines Montagevorgangs, wenn mehr als die Hälfte, in einer axialen Richtung, einer Rolle des ersten Lagers (7-3) in eine Innenringlaufbahn des ersten Lagers (7) eintritt, ein radialer Abstand zwischen dem Innenring des ersten Lagers (7-1) und der Rolle des ersten Lagers (7-3) und zwischen dem Außenring des ersten Lagers (7-2) und der Rolle des ersten Lagers (7-3) aufrechterhalten wird.

2. Elektrische Antriebsgetriebeanordnung nach Anspruch 1, **dadurch gekennzeichnet, dass**: die Öffnung des Eingriffsabschnitts (4-2) in der Stufenbohrung einem Durchmesser des Positionierstifts (3) entspricht; oder der Eingriffsabschnitt (4-2) in Presspassung mit dem Positionierstift (3) ist.

3. Elektrische Antriebsgetriebeanordnung nach Anspruch 2, **dadurch gekennzeichnet, dass**: eine axial angeordnete Entlüftungsnut auf einer Außenfläche des Positionierstiftes (3) vorgesehen ist.

4. Elektrische Antriebsgetriebeanordnung nach Anspruch 2, **dadurch gekennzeichnet, dass**: eine Belüftungsbohrung in dem ersten Gehäuse (1) und/oder dem zweiten Gehäuse (2) vorgesehen ist, und die Belüftungsbohrung mit dem Eingriffsabschnitt (4-2) in Verbindung steht.

5. Elektrische Antriebsgetriebeanordnung nach Anspruch 1, **dadurch gekennzeichnet, dass**: ein Ende des Positionierstiftes (3) mit einer Führungsschräge oder einer Führungsbogenfläche versehen ist.

6. Elektrische Antriebsgetriebeanordnung nach Anspruch 1, **dadurch gekennzeichnet, dass**: die Stufenbohrung einen zwischen dem Führungsabschnitt (4-1) und dem Eingriffsabschnitt (4-2) angeordneten Leitabschnitt umfasst, und der Leitabschnitt dazu dient, den Positionierstift (3) vom Führungsabschnitt (4-1) in den Eingriffsabschnitt (4-2) zu führen.

7. Elektrische Antriebsgetriebeanordnung nach Anspruch 1, **dadurch gekennzeichnet, dass**: in der Stufenbohrung die axialen Längen des Führungsabschnitts (4-1) und des Eingriffsabschnitts (4-2) entsprechend den axialen Abmessungen des ersten Lagers (7), des ersten Gehäuses (1) und der Leistungswelle (6) bestimmt sind.

## Revendications

1. Ensemble boîte de vitesses d'entraînement électrique avec positionnement par trous étagés, comprenant : un premier boîtier (1), un second boîtier (2) et une goupille de positionnement (3) ;
dans lequel le premier boîtier (1) est pourvu d'un premier trou de positionnement (4) sur sa surface de liaison, le second boîtier (2) est pourvu d'un second trou de positionnement (5) correspondant au premier trou de positionnement (4), et le premier boîtier (1) et le second boîtier (2) sont positionnés et connectés au moyen du premier trou de positionnement (4), du second trou de positionnement (5) et de la goupille de positionnement (3) ;
dans lequel le premier trou de positionnement (4) et/ou le second trou de positionnement (5) sont des trous étagés, le trou étagé comprenant une section de guidage (4-1) proche d'une extrémité ouverte du trou étagé et une section d'engagement (4-2) éloignée de l'extrémité ouverte du trou étagé, une ouverture de la section de guidage (4-1) étant plus grande qu'une ouverture de la section d'engagement (4-2), dans lequel la section de guidage (4-1) est utilisée pour guider la goupille de positionnement (3) dans la section d'engagement (4-2),
**caractérisé en ce que** l'ensemble boîte de vitesses d'entraînement électrique comprend en outre un arbre de puissance (6), dans lequel une extrémité de l'arbre de puissance (6) est reliée de manière à être soutenue au premier boîtier (1) par l'intermédiaire d'un premier palier (7), et une position centrale de l'arbre de puissance (6) est reliée de manière à être soutenue au second boîtier (2) par l'intermédiaire d'un second palier (8),
une bague intérieure du premier palier (7-1) est reliée de manière fixe à l'arbre de puissance (6), et une bague extérieure du premier palier (7-2) est reliée de manière fixe au premier boîtier (1),
dans lequel, dans le trou étagé, un jeu est prévu entre la section de guidage (4-1) et la goupille de positionnement (3), de telle sorte que, lors d'un processus d'assemblage, lorsque plus de la moitié, dans une direction axiale, d'un rouleau du premier palier (7-3) entre dans un chemin de roulement de la bague intérieure du premier palier (7), un espace radial est maintenu entre la bague intérieure du premier palier (7-1) et le rouleau du premier palier (7-3) et entre la bague extérieure du premier palier (7-2) et le rouleau du premier palier (7-3).

2. Ensemble boîte de vitesses d'entraînement électrique selon la revendication 1, **caractérisé en ce que** : l'ouverture de la section d'engagement (4-2) dans le trou étagé est égale à un diamètre de la goupille de positionnement (3) ; ou la section d'engagement (4-2) est en ajustement d'interférence avec la goupille de positionnement (3).

3. Ensemble boîte de vitesses d'entraînement électrique selon la revendication 2, **caractérisé en ce que** : une rainure de ventilation disposée axialement est pourvue sur une surface extérieure de la goupille de positionnement (3).

4. Ensemble boîte de vitesses d'entraînement électrique selon la revendication 2, **caractérisé en ce que** : un trou de ventilation est pourvu sur le premier boîtier (1) et/ou le second boîtier (2), et le trou de ventilation est en communication avec la section d'engagement (4-2).

5. Ensemble boîte de vitesses d'entraînement électrique selon la revendication 1, **caractérisé en ce que** : une extrémité de la goupille de positionnement (3) est pourvue d'une rampe de guidage ou d'une surface en arc de guidage.

6. Ensemble boîte de vitesses d'entraînement électrique selon la revendication 1, **caractérisé en ce que** : le trou étagé comprend en outre une section de direction disposée entre la section de guidage (4-1) et la section d'engagement (4-2), et la section de direction est utilisée pour guider la goupille de positionnement (3) dans la section d'engagement (4-2) à partir de la section de guidage (4-1).

7. Ensemble boîte de vitesses d'entraînement électrique selon la revendication 1, **caractérisé en ce que** : dans le trou étagé, des longueurs axiales de la section de guidage (4-1) et de la section d'engagement (4-2) sont déterminées en fonction des dimensions axiales du premier palier (7), du premier boîtier (1) et de l'arbre de puissance (6).
